# FASCICULE DE BREVET EUROPEEN

(11) **EP 1 814 811 B1**
(45) Date de publication et mention de la délivrance du brevet: **16.07.2008**
(21) Numéro de dépôt: 05812314.2
(22) Date de dépôt: 21.10.2005
(51) Int. Cl.: B65G 51/03, B67B 3/064

(54) **PERFECTIONNEMENT AUX MACHINES D'APPRET UTILISEES POUR ORIENTER DES OBJETS**
VERBESSERUNG VON ENDBEHANDLUNGSMASCHINEN, DIE ZUR AUSRICHTUNG VON OBJEKTEN VERWENDET WERDEN
IMPROVEMENT TO FINISHING MACHINES USED TO ORIENT OBJECTS

(30) Priorité: 25.10.2004 FR 0411333
(43) Date de publication de la demande: 08.08.2007
(73) Titulaire: SIDEL PARTICIPATIONS, 76930 Octeville-sur-Mer (FR)
(72) Inventeur: LORANGE, Stéphane, 76930 Octeville sur Mer (FR); MATHIS, Samuel, 76930 Octeville sur Mer (FR); ROTH, Emmanuel, 76930 Octeville sur Mer (FR); WAELDIN, Gilles, 76930 Octeville sur Mer (FR)
(74) Mandataire: Bérogin, Francis
(86) Numéro de dépôt international: PCT/FR2005/002614
(87) Numéro de publication internationale: WO 2006/045927

(56) Documents cités:
- US-A- 3 210 130
- US-A- 4 735 343
- US-A- 5 394 972
- US-B1- 6 533 504
- PATENT ABSTRACTS OF JAPAN vol. 013, no. 045 (M-792), 2 février 1989 (1989-02-02) & JP 63 252822 A (TOPPAN PRINTING CO LTD), 19 octobre 1988 (1988-10-19)

## Description

La présente invention concerne un perfectionnement aux machines d'apprêt utilisées pour orienter des objets comme, par exemple, des bouchons, lesquels bouchons sont livrés à une chaîne de préparation de produits du type chaîne d'embouteillage. Une telle machine est connue du document US 4 735 343.

Ces machines d'apprêt, couramment appelées « cap feeder », reçoivent les bouchons en vrac et, par des moyens appropriés, effectuent automatiquement une manipulation de ces bouchons pour les orienter tous de la même façon, et ces bouchons orientés sont ensuite acheminés jusqu'au poste d'embouteillage par des moyens appropriés du genre convoyeur ou autres.

L'invention concerne une machine d'apprêt qui réalise l'orientation des bouchons au moyen d'un tapis sans fin du type à tasseaux, lequel tapis prélève lesdits bouchons, au moyen de ses tasseaux, dans une trémie qui est généralement située au niveau du sol.

Les bouchons sont prélevés par les tasseaux et ils sont extraits de la trémie par le mouvement du tapis en se logeant dans des rainures qui sont délimitées par ledit tapis et lesdits tasseaux. Le tapis s'élève quasiment à la verticale et il est aménagé et guidé de façon à éjecter automatiquement les bouchons qui n'ont pas la bonne orientation, lesquels bouchons mal orientés retombent tout simplement dans la trémie. Ensuite les bouchons retenus par les tasseaux, c'est-à-dire ceux qui sont bien orientés, sont extraits des rainures du tapis et ils sont véhiculés vers le site d'utilisation, comme, par exemple, un poste d'embouteillage tel qu'une machine de bouchage, par des moyens appropriés qui font la liaison entre le site de la machine d'apprêt et ledit poste d'embouteillage.

Le site de la machine d'apprêt des bouchons est surtout choisi en fonction des contraintes liées à cette machine. En effet cette machine d'apprêt a besoin d'être alimentée régulièrement en bouchons, en raison de la grande quantité de bouchons orientés qui est consommée par la machine de bouchage. Elle doit pouvoir être approchée par un opérateur et/ou par des moyens appropriés pour permettre le chargement de sa trémie avec des bouchons en vrac. Sa situation sur le site ne doit pas non plus être une source de difficultés ou de complications pour réaliser de simples opérations d'entretien ou tous autres travaux.

De plus ces machines d'apprêt sont utilisées et conçues pour réaliser elles-mêmes une partie du convoyage des bouchons orientés. Ce convoyage est en effet réalisé au moyen de leur tapis qui peut s'élever à une hauteur variable ; grâce à cette variation de hauteur, les bouchons sont acheminés ensuite par simple gravité, de la machine d'apprêt à la machine de bouchage. Cette hauteur est adaptée au site, à l'emplacement de la machine d'apprêt et également à l'emplacement de la machine de bouchage.

Cet aménagement particulier de chaque machine d'apprêt fait que le prix de revient de ces machines est relativement élevé en raison notamment du coût de leur tapis ; ce coût grimpe en même temps que la hauteur de son niveau de déchargement des bouchons orientés, lequel niveau correspond à celui de la zone d'éjection desdits bouchons orientés, hors des rainures dudit tapis.

La présente invention propose un perfectionnement à ce type de machine d'apprêt qui permet d'en réduire le coût et de simplifier, d'une part, la machine d'apprêt elle-même et, d'autre part, l'installation du système de convoyage et en particulier son raccordement et son assemblage avec ladite machine d'apprêt.

La présente invention apporte également des améliorations certaines au niveau de l'installation de ces matériels et au niveau de la maintenance. L'invention permet en effet de réduire, voire de supprimer, les contraintes d'installation de ces matériels sur site grâce à de nouvelles possibilités de raccordement avec le poste récepteur où les bouchons orientés sont utilisés.

La présente invention propose en tant que produit, une machine d'apprêt qui rassemble toutes les fonctions essentielles ayant pour but l'alimentation en objets du genre bouchons orientés, d'une ligne de préparation de produits comme, par exemple, une ligne complète d'embouteillage, et elle concerne également le module qui, associé à ladite machine d'apprêt, permet à cette machine d'avoir lesdites fonctions essentielles.

La machine d'apprêt selon l'invention est constituée d'une trémie contenant des bouchons en vrac, et d'un tapis sans fin du type à tasseaux, lesquels tasseaux permettent l'extraction desdits bouchons hors de ladite trémie et ces bouchons sont logés dans des rainures délimitées par lesdits tasseaux et ledit tapis, lequel tapis s'élève à la verticale avec lesdits bouchons et réalise un tri automatique desdits bouchons pour ne retenir que les bouchons ayant la bonne orientation, laquelle machine comporte en plus un système combiné d'éjection et de convoyage desdits bouchons orientés, lequel système combiné comprend :
- une plaque qui couvre plusieurs rainures adjacentes dudit tapis où se situent lesdits bouchons orientés, laquelle plaque forme une sorte d'écran sur ledit tapis pour fermer lesdites rainures et elle s'étend latéralement, au-delà dudit tapis, en aval, pour prendre en charge, avec des moyens complémentaires appropriés, lesdits bouchons orientés lors de leur éjection desdites rainures ;
- des moyens pour réaliser l'éjection desdits bouchons orientés hors de leurs rainures et pour les convoyer ensuite au-delà desdites rainures, vers l'aval, lesquels moyens d'éjection sont constitués de jets de fluide propulsif qui traversent ladite plaque par des aménagements en forme d'ouïes, lesquels jets sont orientés vers l'aval, sur lesdits bouchons ;
- un caisson construit sur cette plaque et dans lequel ledit fluide propulsif est introduit et maintenu sous pression par des moyens appropriés pour servir d'agent moteur afin d'éjecter et d'entraîner lesdits bouchons orientés, lequel caisson s'étend sur toute la surface de ladite plaque et il comporte, dans sa partie aval, des moyens d'accueil et de fixation d'un convoyeur qui prolonge ledit caisson et achemine, avec une certaine continuité, lesdits bouchons orientés vers le ou les postes d'utilisation.

Toujours selon l'invention, les moyens qui prolongent les rainures et qui prennent en charge les bouchons orientés, sont constitués d'un convoyeur intermédiaire, lequel convoyeur intermédiaire comprend un canal continu divisé en plusieurs parties : - une première partie faisant office d'entrée, aménagée en forme de Vé, située face à l'extrémité aval des rainures dudit tapis au niveau de la zone d'éjection desdits bouchons, et ensuite, - une seconde partie formant amorce pour le convoyeur d'acheminement, lequel convoyeur d'acheminement prolonge ledit convoyeur intermédiaire et il assure avec un fluide propulsif également, le transport des bouchons orientés vers le ou les postes d'utilisation.

Selon une autre disposition de l'invention et en particulier dans le cas d'une machine qui permet la préparation de bouchons orientés à des cadences élevées, la plaque qui fait à la fois écran d'éjection et convoyeur intermédiaire, comporte plusieurs lignes d'ouïes et notamment :
- au moins une ligne principale d'éjection et de convoyage qui s'étend sur toute la longueur de ladite plaque ; et,
- au moins une ligne complémentaire d'éjection située au-dessus et/ou au dessous de la ou des lignes principales d'éjection, et qui s'étend sur toute la largeur du tapis.

Toujours selon l'invention, cette plaque qui fait office d'écran et de convoyeur intermédiaire, comporte également, en plus des lignes principales d'éjection :
- au moins une ligne complémentaire d'éjection située au-dessus de la ou des lignes principales d'éjection, et qui s'étend sur toute la largeur du tapis ; et,
- au moins une ligne complémentaire de pré-poussée située sous la ou les lignes principales d'éjection, et qui s'étend également sur toute la largeur dudit tapis pour rassembler les bouchons et les contraindre contre une butée située sur le côté aval dudit tapis, sous l'entrée du Vé de prise en charge qui accueille les bouchons orientés après leur éjection hors des rainures dudit tapis.

Toujours selon l'invention, la machine comporte une ou plusieurs lignes principales d'éjection qui forment, à leur partie aval, au niveau du convoyeur intermédiaire, un chemin dont la courbe est adaptée à l'orientation du convoyeur d'acheminement, lequel chemin peut s'étendre de part et d'autre de l'horizontale, vers le haut ou vers le bas, jusqu'à une position verticale.

Dans le cas où le convoyeur d'acheminement des bouchons orientés fait un angle droit avec le caisson sur lequel il est greffé en s'étendant vers le haut, il constitue un véritable élément fonctionnel de la machine d'apprêt, et il est formé d'un assemblage de plusieurs tronçons qui permettent de modifier facilement sa hauteur pour l'adapter aux contraintes du site et du lieu où lesdits bouchons orientés doivent être livrés.

Cette disposition permet d'avoir, d'un côté, une machine d'apprêt standard ayant un tapis de longueur optimisée et constante quelle que soit sa destination et, d'un autre côté, un module d'éjection et de convoyage dont la hauteur est ajustable en fonction des nécessités et des contraintes propres au site où se situe le poste d'utilisation des bouchons orientés.

Toujours selon l'invention, le système de convoyage des bouchons orientés comprend, pour chaque convoyeur, un canal continu qui couvre la ou les lignes principales d'ouïes, lequel canal est constitué de deux rails latéraux de guidage, parallèles entre eux, disposés de part et d'autre desdites lignes d'ouïes, et d'un rail de guidage qui s'étend en face desdites lignes principales d'ouïes, entre lesdits rails de guidage latéraux, lesdits rails de guidage pouvant comporter des moyens de réglage de leur position pour adapter la dimension dudit canal à celle des bouchons orientés à véhiculer.

Selon une autre disposition de l'invention, l'alimentation du caisson d'éjection et de convoyage et l'alimentation de la chambre du convoyeur d'acheminement, en fluide propulsif sous pression, s'effectuent par le biais de moyens du genre turbine, dont le débit est adapté aux caractéristiques du circuit, à savoir la quantité d'ouïes à alimenter et la pression à maintenir dans ledit caisson et ladite chambre, laquelle pression est, par exemple, de l'ordre de 1500 Pa.

Toujours selon l'invention, la turbine peut être disposée directement sur le caisson d'éjection, dans l'encombrement de la machine et en particulier dans l'encombrement du tapis d'apprêt, mais elle peut aussi être disposée sur le côté de la machine, latéralement, sous le caisson d'éjection et de convoyage.

L'invention concerne également la machine d'apprêt de bouchons pour l'alimentation d'au moins une chaîne d'embouteillage, comportant un système d'éjection et de convoyage des bouchons orientés tel que détaillé précédemment ; laquelle machine comprend : - un tapis dont la dimension est adaptée à sa seule fonction tri et orientation desdits bouchons, devenant une dimension standard, et - un module d'éjection et de convoyage desdits bouchons orientés dont la hauteur de la partie constituant le convoyeur d'acheminement est ajustable pour régler à volonté le niveau auquel lesdits bouchons orientés doivent être livrés en vue de leur utilisation au poste d'embouteillage.

L'invention sera encore détaillée à l'aide de la description suivante et des dessins annexés, donnés à titre indicatif, et dans lesquels :
- la figure 1 représente une machine d'apprêt selon l'invention, munie d'un système d'éjection et de convoyage des bouchons orientés ;
- la figure 2 représente, à une échelle plus importante que figure 1, le module d'éjection et de convoyage des bouchons orientés, séparé de la machine d'apprêt et vu du côté des ouïes et du canal de convoyage ;
- la figure 3 montre, vu sous un autre angle et à plus grande échelle, le détail du coin inférieur gauche de la figure 2 ;
- la figure 4 montre, à une échelle plus importante que figure 2, la partie intermédiaire du module d'éjection et de convoyage qui est située entre la partie éjection pure et la partie convoyage ;
- la figure 5 montre, sans le caisson, la plaque formant écran d'éjection, vue du côté dudit caisson, laquelle plaque est représentée partiellement de même que le tapis de la machine d'apprêt ;
- la figure 6 montre une coupe selon 6-6 de la figure 5, laquelle coupe est schématique et agrandie, montrant les bouchons orientés situés dans les rainures du tapis d'apprêt, lesquelles rainures sont ouvertes sur l'écran d'éjection ;
- la figure 7 est une coupe selon 7-7 de la figure 4, montrant, de façon schématique et agrandie, un bouchon orienté situé dans le canal de convoyage ;
- la figure 8 représente une variante de présentation du module d'éjection et de convoyage associé à la machine d'apprêt selon l'invention.

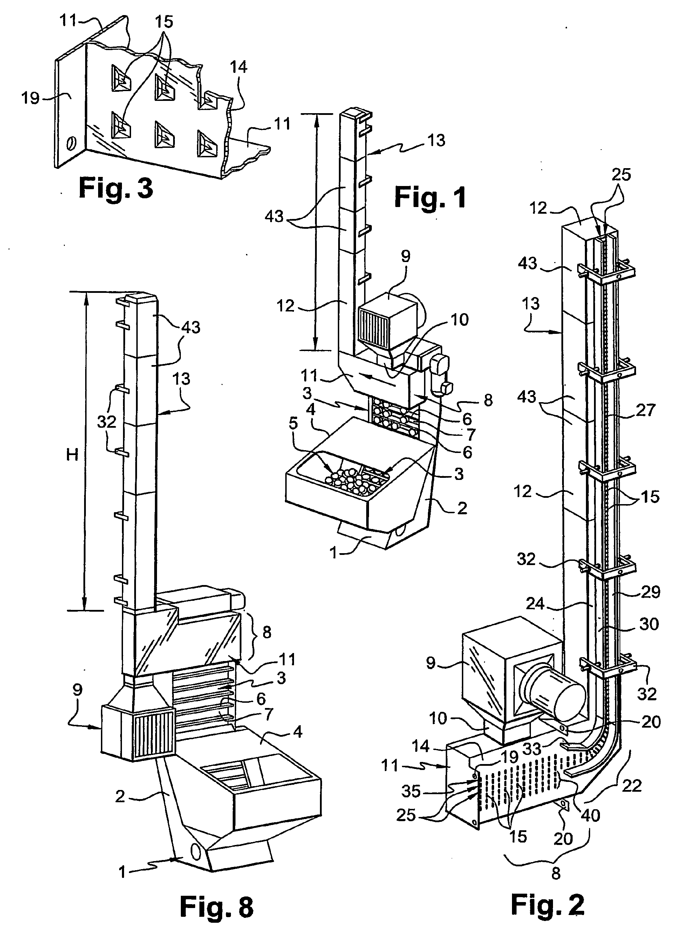

La machine d'apprêt représentée figure 1 comprend un socle (1) qui porte, d'une part, une structure (2) verticale servant de guide pour un tapis (3) sans fin et, d'autre part, une trémie (4) dans laquelle sont déposés en vrac, des bouchons (5). Ces bouchons (5) sont prélevés automatiquement dans la trémie (4) au moyen du tapis (3) du type à tasseaux (6) et ils se logent dans les rainures (7) dudit tapis (3), entre lesdits tasseaux (6).

Le tapis (3) est guidé verticalement dans la structure (2) pour élever les bouchons (5) entre la trémie (4) et la zone où ils sont éjectés, à la partie supérieure de la machine. Cette zone d'éjection est signalée par une flèche horizontale, figure 1, et par le repère de la zone d'éjection (8).

Entre la trémie (4) et la zone d'éjection (8), les bouchons (5) sont soumis à une opération de tri qui permet d'éliminer et de recycler les bouchons mal orientés. Les bouchons (5) bien orientés, apparaissent au dessus de la trémie (4), entre cette trémie (4) et la zone (8) où ils sont éjectés du tapis (3) et en particulier des rainures (7).

Le système d'éjection des bouchons orientés (5) comprend un ensemble de moyens qui permettent d'exercer une pression continue sur chacun desdits bouchons. Cette pression est exercée par un fluide propulsif, de l'air pulsé qui est canalisé et orienté de façon à faire progresser les bouchons latéralement comme détaillé ci-après.

Le flux d'air pulsé nécessaire à l'éjection des bouchons orientés est produit par une turbine (9) ; la sortie (10) de cette turbine (9) est positionnée sur un caisson (11) qui se situe à la partie supérieure de la machine d'apprêt ; l'air pulsé est tout d'abord introduit dans ledit caisson (11) et ensuite dans la chambre (12) du convoyeur d'acheminement (13) qui prolonge ce caisson (11). La pression de l'air dans le caisson (11) et dans la chambre (12) est de l'ordre de 1500 Pa.

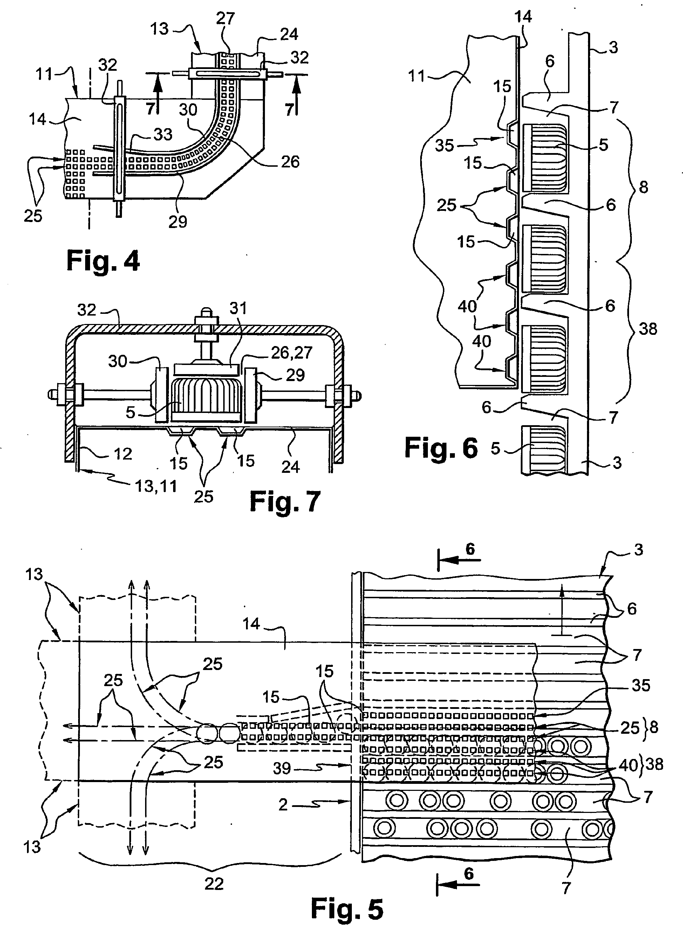

Une partie du caisson (11) masque la partie supérieure du tapis (3) ; le reste dudit caisson déborde latéralement, côté aval, pour supporter le convoyeur d'acheminement (13). La paroi du caisson (11) qui se situe du coté du tapis (3) est constituée d'une plaque (14) visible notamment figure 2. Une partie de cette plaque (14) masque le tapis (3), formant une sorte d'écran, de façon à fermer les rainures (7) dudit tapis (3), comme représenté figure 6.

Comme représentée figure 2, la plaque (14) comporte une multitude d'orifices qui se présentent sous la forme d'ouïes (15). Ces ouïes (15), représentées de façon plus détaillées figure 3, sont obtenues par simple découpage et emboutissage de la plaque (14) qui est, par exemple, une plaque métallique. Ces ouïes (15) forment des buses et façonnent des petits jets d'air au moyen de l'air qui est maintenu sous pression dans le caisson (11). Ces jets d'air pulsé qui sortent des ouïes (15) sont orientés vers l'aval pour propulser latéralement lesdits bouchons hors de leurs rainures (7).

La figure 2 montre le module d'éjection et de convoyage adaptable sur une machine d'apprêt et en particulier adaptable sur la partie supérieure du tapis (3).Ce module est fixé à la structure (2) de la machine, de part et d'autre du tapis (3), au moyen d'un flasque (19) situé à l'extrémité amont du caisson (11) et de pattes (20) situées dans la partie aval dudit caisson (11).

Ce module d'éjection comprend le caisson (11) avec la turbine (9) et le convoyeur d'acheminement (13), lequel caisson (11) comporte, sur la plaque (14) : - la zone d'éjection (8) qui s'étend entre le flasque (19) et les pattes (20) dudit caisson (11), et - un convoyeur intermédiaire (22) qui s'étend depuis lesdites pattes (20) jusqu'à l'extrémité du caisson (11), et, en particulier, jusqu'à l'entrée dudit convoyeur d'acheminement (13).

Sur ce convoyeur d'acheminement (13), un tablier (24) prolonge la plaque (14) avec, de la même façon, des orifices en forme d'ouïes (15) qui propulsent les bouchons vers l'aval, c'est-à-dire vers un poste d'utilisation non représenté.

Le système convoyeur intermédiaire (22) du module qui est représenté figure 2, apparaît de façon plus détaillée figure 4, et il apparaît également figure 5, avec la zone d'éjection (8) qui sera détaillée plus loin.

Ces différentes figures montrent bien la continuité qui existe entre la zone d'éjection (8) et le convoyeur intermédiaire (22). Cette continuité est assurée par la plaque (14) et par les lignes d'ouïes. Il peut y avoir plusieurs lignes d'ouïes (15) ; certaines s'étendent sur toute la plaque (14), d'autres sur une partie seulement de cette plaque.

La continuité entre l'éjection et le convoyage des bouchons résulte de la présence d'au moins une ligne principale (25) comportant des ouïes (15). Cette ligne principale (25) s'étend de la partie amont du caisson (11), à coté du flasque (19), jusqu'à l'extrémité du convoyeur d'acheminement (13). De préférence, comme représenté sur les différentes figures, il y a deux lignes principales (25) d'éjection.

L'écartement de ces lignes principales (25) est en rapport, comme représenté figure 4, avec la largeur du canal du système de convoyage, c'est-à-dire le canal (26) du convoyeur intermédiaire (22) et le canal (27) du convoyeur d'acheminement (13), lesquels canaux (26) et (27) forment un canal continu dont la largeur est sensiblement supérieure au diamètre des bouchons (5).

La figure 7 montre le canal (27) en coupe, servant au guidage des bouchons (5) bien orientés. Ce canal (27) du convoyeur d'acheminement (13) est identique au canal (26) du convoyeur intermédiaire (22). Ces canaux (26) et (27) couvrent les deux lignes principales (25) de convoyage ; ils sont ouverts pour laisser s'échapper l'air pulsé sortant des ouïes (15) et ils sont constitués d'une paire de rail de guidage (29) et (30) latéraux et d'un rail de guidage supérieur (31). Ces rails de guidage (29, 30 et 31) sont portés par une structure en forme dé cavalier (32) ; ces cavaliers (32) sont solidaires de la chambre (12) du convoyeur d'acheminement (13) ou du caisson (11) selon le cas et ils sont répartis régulièrement sur leur longueur. La position des différents rails de guidage (29, 30 et 31) est réglable par rapport aux cavaliers (32), pour pouvoir adapter les dimensions du canal à celles des bouchons (5) à véhiculer.

Sur les figures 2 et 4, seuls les rails de guidage (29) et (30) latéraux sont représentés pour ne pas surcharger. On remarque sur ces figures 2 et 4 ainsi que sur la figure 5, que l'entrée du convoyeur intermédiaire (22) est en forme de Vé. Cette entrée du convoyeur intermédiaire (22) se situe en face des rainures (7) du tapis (3), pour pendre en charge les bouchons (5) dès leur sortie desdites rainures (7). L'ouverture du Vé du côté du tapis (3) est de l'ordre de 1,5 fois le diamètre des bouchons (5).

Le côté inférieur du Vé est constitué par le rail de guidage (29) qui s'étend jusqu'au tapis (3) alors que le côté supérieur est constitué d'un guide (33) qui prolonge le rail de guidage (30). Cette portion de guide (33) est portée par un cavalier (32) qui permet, comme détaillé précédemment, de régler sa position selon les besoins.

Le rail de guidage supérieur (31) du canal (26, 27), visible figure 7, se prolonge lui aussi jusqu'au tapis (3) et il se situe d'ailleurs dans le prolongement de ce tapis pour assurer une continuité au niveau du guidage des bouchons (5) lorsqu'ils sortent de leurs rainures (7).

Selon la vitesse d'avancement du tapis (3), il peut être nécessaire de prévoir des lignes d'ouïes complémentaires.

Comme représentée figures 2, 4 et 5, la plaque (14) comporte, dans sa partie qui forme écran sur le tapis (3), des lignes d'ouïes complémentaires. La zone d'éjection (8) comporte trois lignes d'ouïes : - les deux lignes principales (25) dont il a déjà été question et, - une ligne complémentaire (35) située au-dessus desdites lignes principales (25). Cette ligne complémentaire (35) continue l'éjection des bouchons (5) hors de leurs rainures (7), prenant le relais de la première des deux lignes principales (25) d'éjection lorsque le tapis (3) avance. La longueur de cette ligne complémentaire (35) correspond à la largeur du tapis (3).

Avant d'arriver au niveau de la zone d'éjection (8), les bouchons (5) sont disséminés sur la largeur du tapis (3), dans leur rainure (7). Pour préparer leur éjection, ces bouchons (5) sont pré-poussés dans la zone (38) de la plaque (14) et du tapis (3) contre une butée (39) formée par le rebord aval de la structure (2) de la machine. Les bouchons (5) sont poussés par des jets d'air pulsé provenant de plusieurs lignes d'ouïes situées sous les lignes principales (25). Telles que représentées sur les différentes figures, trois lignes complémentaires (40) avec des ouïes (15) assurent la concentration des bouchons contre la butée (39). L'écartement entre ces différentes lignes d'ouïes est le même que celui des deux lignes principales (25).

La figure 6 montre également les différentes lignes d'ouïes (15) situées face aux bouchons (5). Ces bouchons sont logés dans les rainures (7) qui sont délimitées par le tapis (3) et ses tasseaux (6). Les lignes principales (25) et les lignes complémentaires (35) et (40) sont façonnées dans la plaque (14) du caisson (11) et les ouïes (15) de ces lignes permettent à l'air pulsé d'agir sur les bouchons (15) et de les déplacer dans leurs rainures respectives.

La figure 5 montre aussi une variante de réalisation du convoyeur intermédiaire (22). Ce convoyeur intermédiaire (22) peut former sur la plaque (14) un chemin différent selon l'orientation du convoyeur d'acheminement (13). Le convoyeur d'acheminement (13) peut s'étendre à la verticale au-dessus ou au-dessous du caisson (11) ; il peut aussi s'étendre entre ces deux extrêmes selon un angle variable et en particulier à l'horizontale comme représenté figure 5.

La plaque (14) du caisson (11) peut être aménagée, selon les nécessités, avec des lignes (25) munies d'ouïes (15) qui assurent, quelle que soit l'orientation du convoyeur d'acheminement (13), une continuité entre ce dernier et la zone d'éjection (8).

La figure 8 montre une variante du module d'éjection et de convoyage des bouchons bien orientés. Au lieu d'avoir la turbine (9) installée sur le caisson (11), ce module comporte une turbine (9) installée latéralement, sur le côté du tapis (3), sous ledit caisson (11), dans le prolongement du convoyeur d'acheminement (13). Cette turbine (9) peut aussi, au lieu d'être suspendue au caisson (11), être posée au sol, solidaire éventuellement du socle (1) de la machine.

La machine d'apprêt affublée de son module peut répondre à tous les cas d'installation grâce à la possibilité d'ajuster la hauteur H du convoyeur d'acheminement (13). Cette possibilité d'ajustement de la hauteur H résulte de la conception du convoyeur d'acheminement (13) qui est divisé en tronçons (43) ; ces tronçons ayant des hauteurs unitaires de l'ordre de 60 cm, par exemple, à partir d'une certaine hauteur.

La machine d'apprêt devient une sorte de composant standard ; son tapis a une longueur qui est établie en fonction des besoins pour le tri et l'orientation des bouchons.

## Revendications

1. Machine d'apprêt constituée d'une trémie (4) pouvant accueillir des bouchons (5) en vrac, et d'un tapis (3), sans fin, du type à tasseaux, lesquels tasseaux permettent l'extraction desdits bouchons hors de ladite trémie (4) et ces bouchons sont logés dans des rainures (7) délimitées par lesdits tasseaux (6) et ledit tapis (3), lequel tapis (3) s'élève à la verticale avec lesdits bouchons (5) et réalise un tri automatique desdits bouchons pour ne retenir que les bouchons ayant la bonne orientation,
**caractérisée en ce qu'**elle comporte, en plus, un système combiné d'éjection et de convoyage desdits bouchons orientés, lequel système combiné comprend :
- une plaque (14) qui couvre plusieurs rainures (7) adjacentes dudit tapis (3) où se situent lesdits bouchons (5) orientés, laquelle plaque (14) forme une sorte d'écran sur ledit tapis (3) et elle s'étend latéralement, au-delà dudit tapis, en aval, pour prendre en charge, avec des moyens complémentaires appropriés, lesdits bouchons (5) orientés lors de leur éjection desdites rainures (7) ;
- des moyens pour réaliser l'éjection desdits bouchons (5) orientés hors de leurs rainures (7) et pour les convoyer ensuite au-delà desdites rainures (7), vers l'aval, lesquels moyens d'éjection sont constitués de jets de fluide propulsif qui traversent ladite plaque (14) par des aménagements en forme d'ouïes (15), lesquels jets sont orientés vers l'aval, sur lesdits bouchons (5) ;
- un caisson (11) construit sur cette plaque (14) et dans lequel ledit fluide propulsif est introduit et maintenu sous pression par des moyens appropriés pour servir d'agent moteur afin d'éjecter et d'entraîner lesdits bouchons (5) orientés, lequel caisson (11) s'étend sur toute la surface de ladite plaque (14) et il comporte, dans sa partie aval, des moyens d'accueil et de fixation d'un convoyeur d'acheminement (13) qui prolonge ledit caisson et achemine, avec une certaine continuité, lesdits bouchons (5).

2. Machine d'apprêt selon la revendication 1, **caractérisée en ce que** les moyens qui prolongent les rainures (7) et qui prennent en charge les bouchons (5) orientés, sont constitués d'un convoyeur intermédiaire (22), lequel convoyeur intermédiaire (22) comprend un canal (26), continu et divisé en plusieurs parties : - une première partie faisant office d'entrée, aménagée en forme de Vé, située face à l'extrémité aval desdites rainures (7) dudit tapis (3) au niveau de la zone d'éjection (8), et ensuite, une seconde partie formant amorce pour le convoyeur d'acheminement (13), lequel convoyeur d'acheminement (13) prolonge ledit convoyeur intermédiaire (22) et il assure avec un fluide propulsif, le transport des bouchons (5) orientés.

3. Machine d'apprêt selon la revendication 2, **caractérisée en ce qu'**elle est constituée, dans le cas où elle permet la préparation de bouchons (5) orientés à des cadences élevées, d'une plaque (14) qui comporte plusieurs lignes munies d'ouïes (15) et notamment :
- au moins une ligne principale (25) d'éjection et de convoyage qui s'étend sur toute la longueur de ladite plaque (14) ;
- au moins une ligne complémentaire (35) d'éjection située au-dessus ou/et en dessous de ladite ou desdites lignes principales d'éjection, et qui s'étend sur toute la largeur du tapis (3).

4. Machine d'apprêt selon la revendication 3, **caractérisée en ce qu'**elle est constituée, dans le cas où elle permet la préparation de bouchons (5) orientés à des cadences élevées, d'une plaque (14) qui comporte plusieurs lignes d'ouïes et notamment :
- au moins une ligne principale (25) d'éjection et de convoyage qui s'étend sur toute la longueur de ladite plaque (14) ;
- au moins une ligne complémentaire (35) d'éjection située au-dessus de ladite ou desdites lignes principales d'éjection, et qui s'étend sur toute la largeur du tapis (3) ;
- au moins une ligne complémentaire (40) de pré-poussée située sous la ou les lignes principales (25) d'éjection, et qui s'étend également sur toute la largeur dudit tapis (3) pour rassembler les bouchons (5) et les contraindre contre une butée (39) située sur le coté aval dudit tapis (3), sous l'entrée du Vé de prise en charge qui accueille lesdits bouchons (5) orientés après leur éjection hors des rainures (7) dudit tapis (3).

5. Machine d'apprêt selon l'une quelconque des revendications 2 à 4, **caractérisée en ce qu'**elle comporte une ou plusieurs lignes (25) d'éjection qui forment, à leur partie aval, au niveau du convoyeur intermédiaire (22), un chemin dont la courbe est adaptée à l'orientation du convoyeur d'acheminement (13), lequel chemin peut, entre le caisson et le convoyeur d'acheminement, s'étendre de part et d'autre de l'horizontale, jusqu'à une position verticale.

6. Machine d'apprêt selon l'une quelconque des revendications 2 à 5, **caractérisée en ce qu'**elle comporte, dans le cas où le convoyeur d'acheminement (13) des bouchons (5) fait un angle droit avec le caisson (11) sur lequel il est greffé, un convoyeur d'acheminement (13) qui constitue un véritable élément fonctionnel de ladite machine d'apprêt, lequel convoyeur d'acheminement (13) est formé d'un assemblage de plusieurs tronçons (43) qui permettent de modifier facilement sa hauteur, pour l'adapter aux contraintes du site et du lieu où lesdits bouchons (5) doivent être livrés.

7. Machine d'apprêt selon l'une quelconque des revendications 2 à 6, **caractérisée en ce que** le système de convoyage des bouchons (5) orientés comprend un canal (26) pour le convoyeur intermédiaire (22) et un canal (27) pour le convoyeur d'acheminement (13), lesquels canaux (26, 27) couvrent la ou les lignes principales (25) d'ouïes (15) en étant ouverts pour laisser s'échapper le fluide propulsif et ils sont constitués - de deux rails de guidage (29, 30) latéraux, parallèles entre eux, disposés de part et d'autre desdites lignes principales (25) d'ouïes (15), et - d'un rail de guidage (31) qui s'étend en face desdites lignes principales (25) d'ouïes (15), entre lesdits rails de guidage (29, 30) latéraux, lesdits rails de guidage (29, 30) et (31) pouvant comporter des moyens de réglage de leur position pour adapter la dimension dudit canal (26) à celle desdits bouchons (5) à véhiculer.

8. Machine d'apprêt selon l'une quelconque des revendications 1 à 7, **caractérisée en ce que** les moyens d'alimentation en fluide propulsif sous pression du caisson (11) et de la chambre (12) du convoyeur d'acheminement (13) consistent en une turbine (9) dont le débit est adapté aux caractéristiques du circuit, à savoir la quantité d'ouïes (15) à alimenter et la pression à maintenir dans ledit caisson (11) et ladite chambre (12), laquelle pression est de l'ordre de 1500 Pa.

9. Machine d'apprêt selon la revendication 8, **caractérisée en ce qu'**elle comporte une turbine (9) disposée directement sur le caisson (11), dans l'encombrement du tapis (3).

10. Machine d'apprêt selon la revendication 8, **caractérisée en ce qu'**elle comporte une turbine (9) disposée sur le côté du tapis (3), sous le caisson (11).

11. Machine d'apprêt de bouchons pour l'alimentation d'au moins une chaîne d'embouteillage, comportant un système d'éjection et de convoyage des bouchons orientés selon l'une quelconque des revendications 1 à 10, **caractérisée en ce qu'**elle comporte un tapis (3) de dimension standard et un module d'éjection et de convoyage des bouchons (5) qui se greffe sur ladite machine et dont la hauteur H de la partie constituant le convoyeur d'acheminement (13) est ajustable pour régler à volonté le niveau auquel lesdits bouchons (5) doivent être livrés au poste d'embouteillage.

## Claims

1. A finishing machine comprising a hopper (4) for receiving loose caps (5), and an endless belt (3), of the type with laths for extracting said caps from said hopper (4), and these caps are lodged in grooves (7) bounded by said laths (6) and said belt (3), said belt (3) moving vertically with said caps (5) and automatically sorting said caps to retain only those with the proper orientation,
**characterized in that** it further comprises a combined system for ejecting and conveying said oriented caps, said combined system comprising:
- a plate (14) which covers several adjacent grooves (7) of said belt (3) in which said oriented caps (5) are located, said plate (14) forming a sort of screen on said belt (3) and extending laterally, downstream beyond said belt, to take charge, with suitable complementary means, of said oriented caps (5) as they are ejected from said grooves (7);
- means for ejecting said oriented caps (5) from their grooves (7) and for subsequently conveying them downstream beyond said grooves (7), said ejection means comprising jets of propellant fluid which pass through said plate (14) through eye shaped arrangements (15), said jets being oriented downstream, on said caps (5);
- a casing (11) constructed on said plate (14) and into which said propellant fluid is introduced and maintained under pressure by suitable means to serve as a driving agent to eject and entrain said oriented caps (5), said casing (11) extending over the entire surface of said plate (14) and comprising, in its downstream part, means for accommodating and attaching a routing conveyor (13) which prolongs said casing and routes said caps (5), with some continuity.

2. The finishing machine as claimed in claim 1, **characterized in that** the means which prolong the grooves (7) and which take charge of the oriented caps (5), comprise an intermediate conveyor (22), said intermediate conveyor (22) comprising a continuous channel (26) divided into several parts: - a first part acting as an inlet, arranged in a V shape, located facing the downstream end of said grooves (7) of said belt (3) at the ejection zone (8), and subsequently, a second part forming a leader for the routing conveyor (13), said routing conveyor (13) prolonging said intermediate conveyor (22) and, with a propellant fluid, transporting said oriented caps (5).

3. The finishing machine as claimed in claim 2, **characterized in that,** in the case in which it is used for preparing oriented caps (5) at high production rates, it comprises a plate (14) comprising several lines equipped with eyes (15) and particularly:
- at least one main ejection and conveying line (25) extending over the entire length of said plate (14);
- at least one complementary ejection line (35) located above and/or below said main ejection line(s), and extending over the entire width of the belt (3).

4. The finishing machine as claimed in claim 3, **characterized in that,** in the case in which it is used for preparing oriented caps (5) at high production rates, it comprises a plate (14) comprising several lines equipped with eyes and particularly:
- at least one main ejection and conveying line (25) extending over the entire length of said plate (14);
- at least one complementary ejection line (35) located above said main ejection line(s), and extending over the entire width of the belt (3);
- at least one complementary pre-thrust line (40) located under the main ejection line(s) (25) and also extending over the entire width of said belt (3) to gather the caps (5) and force them against a stop (39) located on the downstream side of said belt (3), under the inlet of the supporting V which receives said oriented caps (5) after their ejection from the grooves (7) of said belt (3).

5. The finishing machine as claimed in any one of claims 2 to 4, **characterized in that** it comprises one or more ejection lines (25) which, in their downstream part, at the intermediate conveyor (22), form a path of which the curve is adapted to the orientation of the routing conveyor (13), said path possibly extending between the casing and the routing conveyor on either side of the horizontal, up to a vertical position.

6. The finishing machine as claimed in any one of claims 2 to 5, **characterized in that,** in the case in which the routing conveyor (13) of the caps (5) makes a right angle with the casing (11) to which it is fitted, it comprises a routing conveyor (13) which constitutes a true functional element of said finishing machine, said routing conveyor (13) being formed of an assembly of several lengths (43) making it possible to change its height easily to adapt it to the requirements of the site and the place to which said caps (5) must be delivered.

7. The finishing machine as claimed in any one of claims 2 to 6, **characterized in that** the conveyor system of the oriented caps (5) comprises a channel (26) for the intermediate conveyor (22) and a channel (27) for the routing conveyor (13) said channels (26, 27) covering the main line(s) (25) of eyes (15) remaining open to allow the propellant fluid to escape and comprising - two lateral guide rails (29, 30) parallel to one another, placed on either side of said main lines (25) of eyes (15), and - a guide rail (31) extending opposite said main lines (25) of eyes (15), between said lateral guide rails (29, 30), said guide rails (29, 30) and (31) optionally comprising means for adjusting their position to adapt the size of said channel (26) to that of said caps (5) to convey.

8. The finishing machine as claimed in any one of claims 1 to 7, **characterized in that** the means for supplying pressurized propellant fluid to the casing (11) and to the chamber (12) of the routing conveyor (13) comprise a turbine (9) of which the capacity is adapted to the characteristics of the circuit, that is, the quantity of eyes (15) to be supplied and the pressure to be maintained in said casing (11) and said chamber (12), said pressure being about 1500 Pa.

9. The finishing machine as claimed in claim 8, **characterized in that** it comprises a turbine (9) placed directly on the casing (11), within the dimensions of the belt (3).

10. The finishing machine as claimed in claim 8, **characterized in that** it comprises a turbine (9) placed on the belt (3) side under the casing (11).

11. A cap finishing machine for feeding at least one bottling line, comprising a system for ejecting and conveying oriented caps as claimed in any one of claims 1 to 10, **characterized in that** it comprises a belt (3) having a standard size and a cap (5) ejection and conveying module which is fitted to said machine and of which the height H of the part constituting the routing conveyor (13) is adjustable to freely adjust the level at which said caps (5) must be delivered to the bottling station.

## Patentansprüche

1. Finishingmaschine, gebildet durch einen Trichter (4), der lose Verschlüsse (5) aufnehmen kann, und ein EndlosFörderband (3), vom Typ eines Förderbands mit Leisten, wobei diese Leisten das Herausnehmen der genannten Verschlüsse aus dem genannten Trichter (4) ermöglichen und diese Verschlüsse in Schlitzen (7) sitzen, die von den genannten Leisten (6) und dem genannten Förderband (3) begrenzt werden, wobei dieses Förderband (3) mit den genannten Verschlüssen (5) in die Senkrechte übergeht und eine automatische Sortierung der genannten Verschlüsse vornimmt, um nur die Verschlüsse mit der richtigen Ausrichtung zurückzuhalten,
**dadurch gekennzeichnet, dass** sie darüber hinaus ein kombiniertes Auswurf- und Fördersystem für die genannten ausgerichteten Verschlüsse aufweist, wobei dieses kombinierte System Folgendes umfasst:
- eine Platte (14), die mehrere benachbarte Schlitze (7) des genannten Förderbands (3) bedeckt, in denen sich die genannten ausgerichteten Verschlüsse (5) befinden, wobei diese Platte (14) eine Art Schirm über dem genannten Förderband (3) bildet und sie sich seitlich, über das Förderband hinaus, stromab erstreckt, um, mit geeigneten komplementären Mitteln, die genannten ausgerichteten Verschlüsse (5) bei ihrem Auswurf aus den genannten Schlitzen (7) zu übernehmen;
- Mittel, um die genannten ausgerichteten Verschlüsse (5) aus ihren Schlitzen (7) auszuwerfen und sie anschließend außerhalb der genannten Schlitze (7) stromab zu transportieren, wobei die genannten Auswurfmittel aus Strahlen eines Treibfluids gebildet werden, die die genannte Platte (14) über Ausbildungen in Form von Eintrittsöffnungen (15) durchqueren, wobei diese Strahlen stromab auf die genannten Verschlüsse (5) ausgerichtet sind;
- ein auf dieser Platte (14) ausgebildeter Kasten (11), in den das genannte Treibfluid durch geeignete Mittel eingeleitet und unter Druck gehalten wird, um als Treibmittel zum Auswerfen und Bewegen der genannten ausgerichteten Verschlüsse (5) zu dienen, wobei dieser Kasten (11) sich über die gesamte Oberfläche der genannten Platte (14) erstreckt und er, in seinem stromabseitigen Teil, Mittel zum Aufnehmen und Fixieren einer Führungs- und Fördereinrichtung (13) umfasst, die den genannten Kasten verlängert und, mit einer bestimmten Kontinuität, die genannten Verschlüsse (5) führt.

2. Finishingmaschine nach Anspruch 1, **dadurch gekennzeichnet, dass** die Mittel, die die Schlitze (7) verlängern und die ausgerichteten Verschlüsse (5) übernehmen, durch eine Zwischenfördereinrichtung (22) gebildet werden, wobei diese Zwischenfördereinrichtung (22) einen Kanal (26) umfasst, der kontinuierlich ausgebildet und in mehrere Teile unterteilt ist: - ein als Eingangsöffnung dienender erster Teil, der in V-Form ausgebildet ist und sich gegenüber dem Stromab-Ende der genannten Schlitze (7) des genannten Förderbands (3) im Bereich der Auswurfzone (8) befindet, und anschließend ein zweiter Teil, der den Ausgangspunkt für die Führungs- und Fördereinrichtung (13) bildet, wobei diese Führungs- und Fördereinrichtung (13) die genannte Zwischenfördereinrichtung (22) verlängert und sie mit einem Treibfluid den Transport der ausgerichteten Verschlüsse (5) sicherstellt.

3. Finishingmaschine nach Anspruch 2, **dadurch gekennzeichnet, dass** sie, im Falle dass sie die Vorbereitung von ausgerichteten Verschlüssen (5) in hoher Geschwindigkeit ermöglicht, durch eine Platte (14) gebildet wird, die mehrere mit Eintrittsöffnungen (15) versehene Linien und insbesondere Folgendes aufweist:
- mindestens eine Hauptlinie (25) zum Auswerfen und Fördern, die sich über die gesamte Länge der genannten Platte (14) erstreckt;
- mindestens eine komplementäre Linie (35) zum Auswerfen, die sich über oder/und unter der genannten Hauptlinie oder den genannten Hauptlinien zum Auswerfen befindet und die sich über die gesamte Breite des Förderbands (3) erstreckt.

4. Finishingmaschine nach Anspruch 3, **dadurch gekennzeichnet, dass** sie, im Falle dass sie die Vorbereitung von ausgerichteten Verschlüssen (5) in hoher Geschwindigkeit ermöglicht, durch eine Platte (14) gebildet wird, die mehrere Linien von Eintrittsöffnungen und insbesondere Folgendes aufweist:
- mindestens eine Hauptlinie (25) zum Auswerfen und Fördern, die sich über die gesamte Länge der genannten Platte (14) erstreckt;
- mindestens eine komplementäre Linie (35) zum Auswerfen, die sich über der genannten Hauptlinie oder den genannten Hauptlinien zum Auswerfen befindet und die sich über die gesamte Breite des Förderbands (3) erstreckt;
- mindestens eine komplementäre Linie (40) zum Vorabschub, die sich unter der oder den Hauptlinien (25) zum Auswerfen befindet und die sich ebenfalls über die gesamte Breite des genannten Förderbands (3) erstreckt, um die Verschlüsse (5) zu sammeln und sie gegen einen Anschlag (39) zu treiben, der sich an der Stromabseite des genannten Förderbands (3) unter dem Einlass der V-förmig ausgebildeten Übernahmeeinrichtung befindet, die die genannten ausgerichteten Verschlüsse (5) nach ihrem Auswerfen aus den Schlitzen (7) des genannten Förderbands (3) aufnimm.

5. Finishingmaschine nach einem der Ansprüche 2 bis 4, **dadurch gekennzeichnet, dass** sie eine oder mehrere Linien (25) zum Auswerfen aufweist, die in ihrem stromabseitigen Teil im Bereich der Zwischenfördereinrichtung (22) einen Weg bilden, dessen Krümmung an die Ausrichtung der Führungs- und Fördereinrichtung (13) angepasst ist, wobei dieser Weg sich, zwischen dem Kasten und der Führungs- und Fördereinrichtung, beidseitig der Horizontalen bis zu einer vertikalen Position erstrecken kann.

6. Finishingmaschine nach einem der Ansprüche 2 bis 5, **dadurch gekennzeichnet, dass** sie, im Fall dass die Führungs- und Fördereinrichtung (13) der Verschlüsse (5) einen rechten Winkel mit dem Kasten (11), an dem sie angebracht ist, bildet, eine Führungs- und Fördereinrichtung (13) aufweist, die ein wirkliches funktionales Element der genannten Finishingmaschine bildet, wobei diese Führungs- und Fördereinrichtung (13) durch eine Montage mehrerer Stücke (43) gebildet wird, die eine einfache Veränderung ihrer Höhe ermöglichen, um sie an Zwänge des Standorts und des Orts, an den die genannten Verschlüsse (5) geliefert werden müssen, anzupassen.

7. Finishingmaschine nach einem der Ansprüche 2 bis 6, **dadurch gekennzeichnet, dass** das System zum Fördern der ausgerichteten Verschlüsse (5) einen Kanal (26) für die Zwischenfördereinrichtung (22) und einen Kanal (27) für die Führungs- und Fördereinrichtung (13) umfasst, wobei diese Kanäle (26, 27) die Hauptleitung oder die Hauptleitungen (25) mit Eintrittsöffnungen (15) bedecken, wobei sie offen sind, um das Treibfluid herauszulassen, und sie gebildet werden aus - zwei seitlichen Führungsschienen (29, 30), die zueinander parallel sind und beidseitig der genannten Hauptleitungen (25) mit Eintrittsöffnungen (15) angeordnet sind, und - einer Führungsschiene (31), die sich gegenüber den genannten Hauptleitungen (25) mit Eintrittsöffnungen (15), zwischen den genannten seitlichen Führungsschienen (29, 30), erstreckt, wobei die genannten Führungsschienen (29, 30) und (31) Mittel zum Einstellen ihrer Position umfassen können, um die Größe des genannten Kanals (26) an die der zu transportierenden Verschlüsse (5) anzupassen.

8. Finishingmaschine nach einem der Ansprüche 1 bis 7, **dadurch gekennzeichnet, dass** die Mittel zur Versorgung mit Treibfluid unter Druck des Kastens (11) und der Kammer (12) der Führungs- und Fördereinrichtung (13) aus einer Turbine (9) bestehen, deren Durchsatz an die Eigenschaften des Kreislaufs, also die Menge der zu versorgenden Eintrittsöffnungen (15) und den im genannten Kasten (11) und der genannten Kammer (12) aufrecht zu erhaltenden Druck, wobei dieser Druck ungefähr 1500 Pa beträgt, angepasst ist.

9. Finishingmaschine nach Anspruch 8, **dadurch gekennzeichnet, dass** sie eine Turbine (9) aufweist, die direkt am Kasten (11), in dem für das Förderband (3) notwendigen Raum, angeordnet ist.

10. Finishingmaschine nach Anspruch 8, **dadurch gekennzeichnet, dass** sie eine Turbine (9) aufweist, die an der Seite des Förderbands (3), unter dem Kasten (11), angeordnet ist.

11. Finishingmaschine für Verschlüsse zur Versorgung mindestens einer Flaschenbefüllanlage, umfassend ein System zum Auswerfen und Fördern der ausgerichteten Verschlüsse nach einem der Ansprüche 1 bis 10, **dadurch gekennzeichnet, dass** sie ein Förderband (3) in Standardgröße und ein Modul zum Auswerfen und Fördern der Verschlüsse (5) umfasst, das an der genannten Maschine angebracht ist und dessen Höhe H des Teils, der die Führungs- und Fördereinrichtung (13) bildet, verstellbar ist, um die Höhe, in der die genannten Verschlüsse (5) an die Flaschenbefüllstation geliefert werden sollen, frei einzustellen.
